# EUROPEAN PATENT SPECIFICATION

(11) **EP 2 949 290 B1**
(45) Date of publication and mention of the grant of the patent: **04.07.2018**
(21) Application number: 13872506.4
(22) Date of filing: 20.12.2013
(51) Int. Cl.: A61C 19/02, A61C 8/00

(54) **CONTAINER SYSTEM FOR STORING, RETRIEVING AND TRANSPORTING DENTAL IMPLANTS**
BEHÄLTERSYSTEM ZUM SPEICHERN, HERAUSNEHMEN UND TRANSPORTIEREN VON ZAHNIMPLANTATEN
SYSTÈME D'EMBALLAGE POUR LE STOCKAGE, LA CAPTURE ET LE TRANSPORT D'IMPLANTS DENTAIRES

(30) Priority: 23.01.2013 BR 102013001690
(43) Date of publication of application: 02.12.2015
(73) Proprietor: JJGC Indústria e Comércio de Materiais Dentários S.A., 81270-200 Curitiba - PR (BR)
(72) Inventor: THOMÉ, Geninho, 80240-170 Curitiba - PR (BR); GOLIN, Alexsander Luiz, 81570-001 Curitiba - PR (BR); LUCCA, Ilderaldo Jose, 82020-000 Curitiba - PR (BR); DA SILVA, Ivanio Pereira, 81860-020 Curitiba - PR (BR); DE SOUZA, Milton Roberto, 81770-320 Curitiba - PR (BR)
(74) Representative: Pereira da Cruz, Joao
(86) International application number: PCT/BR2013/000587
(87) International publication number: WO 2014/113852

(56) References cited:
- WO-A1-01/50978
- WO-A1-2009/147166
- KR-U- 20090 009 102
- US-A- 4 856 648
- US-A1- 2005 023 166
- US-A1- 2005 023 166

## Description

### Application field

This invention relates to dental devices field, particularly packaging and handling systems for components and dental implants, and more precisely, a container for packaging, retrieving and carrying dental implants.

### Innovation history and prior art analysis

Dental implants are, as a rule, metal screws, preferably made of titanium, acting as artificial tooth roots.

They are positioned in the maxillary and mandibular bones by means of surgical procedures. The implants provide a stable support for installing artificial teeth, known as dental prostheses. Remarkably, these artefacts are made of resistant alloys with low body rejection or reaction expectancy and, therefore, the use of titanium became widespread.

Also, due to interaction with living tissue, the implants for single use must be sterile, to minimize the risk of contamination. Each implant should be packed in clean state, in a packaging that protects it from mechanical damage, in order to maintain sterilization and sealing, having as objective end user protection. Thus, the packaging for such implant should be designed to preserve it from damage during the handling, carrying and storage. One method to ensure the safety procedures for installation of dental implants is by retrieving and carrying the implant to the surgical cavity. It must ensure that during retrieval, the dental implant is not damaged and, when being conveyed, the packaging allows the removal of dental implant without any grasp or obstruction.

Therefore, as of common knowledge in dentistry field, as well as in health care area as a whole, the use of products equipped with full sterilization, disinfection, and all methods to prevent surgical contamination is always recommended. It is known that product sterilization is only ensured if healthy state of the product packaging, which must be ensured by the time of packaging opening. Currently, the packaging for dental implants available in the market are designed specifically for each particular type of implant, making the conditioning of multiple types of implant difficult due to dimensional issues or implant fitting in packaging. Moreover, after opening the lid, implant handling is subject to a possible fall of the implant, and its consequent contamination.

As a result, an interaction between the dental implant and its packaging is desirable to provide an exact accommodation of the implant, thus minimizing the risk of damage, either by shocks due to displacement of dental implant inside the packaging or implant accidental release for use during retrieval.

However, after verifying the existing packaging for dental implants that rely on an insertion system, configuration issues have been found that do not comply with the current technique of inserting the implant, which may cause a failure in surgical operation if no strict standards are used to ensure safety. For example, if the dental implant is not fully stable at the time of retrieval, it may affect surgical procedure due to displacement. In another common example, the implant may be detached from packaging and be thrown out of the surgical field, being contaminated and making its use unfeasible.

Still in this technique, MU8600477 protection shows a packaging that eliminates the need for a specific tool, known as "assembler", consisting of a sealing lid to accommodate the implant internally, which fits in an indent inside the disk to firmly secure the implant. However, it does not perform the same fitting and adaptation solution for different implants as proposed in this innovation.

Document PI0515330 shows a packaging for dental implant provided with a receptacle to keep implant fixed until removal for use. However, it does not perform the same fitting and adaptation solution for different implants as stated in this innovation.

Patent application PI0902546 clearly shows a cylinder-shape packaging, where two inner containers fit both the implant and implant lid, which is hermetically sealed by fitting lids. However, it does not performs the same fitting and adaptation solution for different implants as stated in this innovation.

Invention WO2011101167 shows an implant packaging in which a protective material is applied directly to the surface of the implant, forming a graft around the implant, so that such protection may be composed of polyethylene glycol hydrogels, said gels consisting of polyethylene glycol by-products, fibrin gels, protein gels, oligomers gels, hydrocolloid gels, gelatines and mixtures thereof. Further documents in the art are exemplified by WO 2009/147166 A1 and US 2005/023166 A1. Based on the foregoing, it is understood that there are still unsolved problems in this technique. Based on the above statement, and having continuous product development in mind, we present an innovation, also claiming the privileges of its protection for its novelty and inventive step, as explained below.

It relates to dental implants packaging endowed with innovative and technological packaging system, allowing the conditioning, storage, transportation and retrieval of dental implants of any diameter and length, which in turn reduces and facilitates the process of production and assembly of several dental implants models in a single packaging.

### Description of drawings

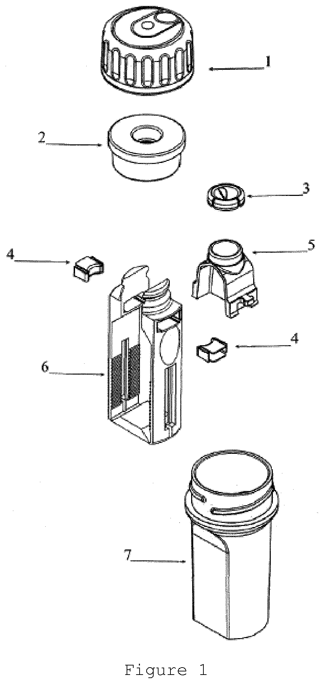

Figure 1 illustrates an exploded view of the proposed packaging as an example, where the components can be seen, such as outer lid (1); inner lid (2); implant apical portion support disk (3), made of commercially pure titanium; implant cervical portion support side grippers (4), made of commercially pure titanium; the lifter (5); the gripper-shaped support (6) and the outer flask (7).

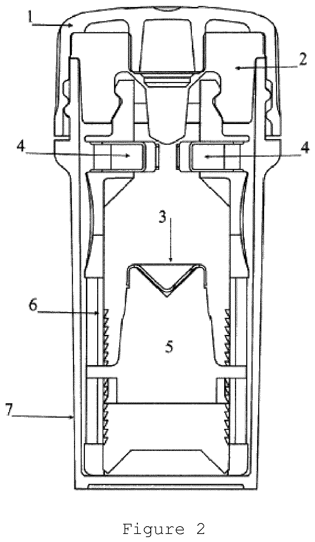

Figure 2 shows a cross-sectional view of the proposed packaging as an example, where components can be seen when the enclosure is in a mounted position, such as outer lid (1); inner lid (2); implant apical portion support disk (3), made of titanium; implant cervical portion support side grippers (4), made of titanium; lifter (5); gripper-shaped support (6) and outer flask (7).

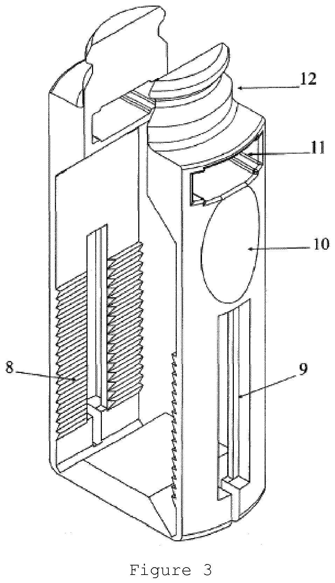

Figure 3 is a detailed view of the gripper-shaped support (6), where its mains features can be seen, such as the side grooves (8) for lifter (5) height adjustment; side slots (9), to enable lifter (5) fitting and sliding; side grooves (10), which facilitate implant holding and handling, side holes (11) to insert side titanium grippers (4); and upper fittings (12) to enable perfect support adaptation, as well as the interaction with inner lid (2).

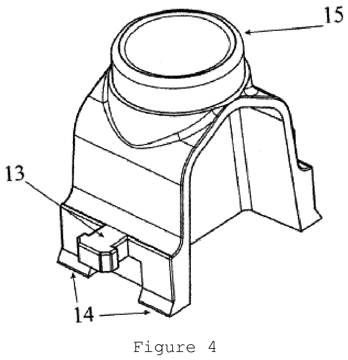

Figure 4 shows a detailed view of the lifter (5), highlighting its pyramidal conformation and features, such as side couplings (13) to fit side slots (9) of the gripper-shaped support (6); side protrusions (14) to fit side grooves (8) of the gripper-shaped support (6); and the top (15) for fitting of the implant apical portion support disk (3).

### Detailed description of the innovation

A packaging for dental implants allowing not only the proper conditioning of the artefact, but also its retrieval and transport for safely implant is presented as an innovation, minimizing the risk of damage to the implant. Thus, its improvement was developed aiming to create a product capable of providing greater safety when in use, preventing contamination and possible infection, besides implant ineffectiveness during surgery procedures.

Said packaging comprises a "conditioning, storing, carrying and retrieving system", enabling height adjustment to accommodate different types of implants. Said system is comprised by fitting the lifter (5) with side grooves (8) of the gripper-shaped support (6). The lower part of the lifter (5) has side protrusions (14) supporting on side grooves (8) of the gripper-shaped support (6) where applicable, enabling different lifter (5) height adjustments inside the packaging. Side couplings (13) on lifter (5) body interact with the side slots (9) of the gripper-shaped support (6), enabling the lifter (5) to slide vertically inside the gripper-shaped support (6), adjusting in the desired position due to the implant to be conditioned.

The lifter (5) also has a top (15) sized to fit the titanium-made receptacle (3) to fit the implant, allowing to preserve the implant from any eventual damage arising from the potential migration of chemical components of the polymer to the metal. For the same reason, side holders (4) are allocated in the side holes (11) of the gripper-shaped removal mechanism (6) to interact with the implant.

The gripper-shaped support (6) is the main highlight of this innovation, since it provides the most distinct functionalities of this innovation by allowing the implant conditioning in the packaging, associated with the inner lid (2), as it keeps the implant in the desired position, by pressing it against the implant apical portion support disk (3). The gripper-shaped support (6) comprises a single piece bent to adapt to the outer housing (7), by being completely inserted in it, forming the gripper shape that enables the implant to attach safely. Side grooves (10) indicate the pressure point of the body in the gripper-shaped removal mechanism (6) so that the side holders (4) secure the implant and enable its removal from the packaging and subsequent removal by means of suitable tools, resulting in a safe and reliable method of use for professionals.

The outer lid (1) screws up the outer housing (7) and presses the inner lid (2) against the removal mechanism (6), so that there is an interaction of the inner lid (2) with upper protrusions (12) of the gripper-shaped removal mechanism (6) to fit inner lid (2) in said protrusions (12), by fixing the upper part of the gripper-shaped removal mechanism (6), and hence stabilizing the packaging inner assembly and protecting the implant. Therefore, it is desirable that the inner lid (2) is made of polymer material soft enough to allow this interaction with upper protrusions (12) of the gripper-shaped removal mechanism (6) .

This way, the packaging designed here allows the proper conditioning of the implant in a protective container, as well as the manipulation of said implant for use by means of a mechanism allowing the safe removal of the packaging for later use.

Also, since the packaging shown here allows the accommodation of dental implants of different diameters and lengths, by facilitating and streamlining production process and assembly of different models in a single packaging. Additionally, the reduction of packaging interchange facilitates the storage, handling and usage of the materials, reducing the time to perform these tasks by providing a standardization of these methods, moving and storage equipment, with a consequent reduction in costs, besides the benefits to the Environment, since it has a less aggressive production due to significant reduction of the volume to be carried.

Thus, this new packaging aims at, besides models consolidation, reducing materials used for production, storage and transportation savings, as well as ensured sterilization.

This innovation is not limited to the examples displayed and illustrated here, and should be understood within its broadest scope as defined by claim 1. Many other changes and innovation representations will come to mind of any individual skilled in this innovation technique, having the benefit of the teaching presented in previous descriptions and drawings.

## Claims

1. A packaging system for storage, retrieval and transportation of a dental implant, with an outer housing (7) and an outer lid (1), comprising an assembly that provides a gripper-shaped removal mechanism (6) associated with a lifter (5) to enable height adjustment for conditioning of said dental implant, where said gripper-shaped removal mechanism (6) has first side grooves (8) to adjust the height of the lifter (5); side slots (9) for engaging and sliding the lifter (5); second side grooves (10) for implant handling; side holes (11) for insertion of side holders (4); and upper protrusions (12) for engaging and interacting with an inner lid (2), wherein said lifter (5) provides side couplings (13) to interact with said side slots (9) of said removal mechanism (6); side projections (14) for interacting with said first side grooves (8) of said removal mechanism (6) and a top (15) to fit a receptacle (3), wherein said inner lid (2) is made of elastic polymeric material and said side holders (4) and receptacle (3) are made of titanium; and the assembly is inserted in said outer housing (7) and closed with said outer lid (1), which presses the inner lid (2) against said removal mechanism (6) to maintain the implant in its desired position.

## Patentansprüche

1. Ein Verpackungssystem für Lagerung, Wiederfindung und Transport eines Zahnimplantats, mit einem äußeren Gehäuse (7) und einem äußeren Deckel (1), welches eine Anordnung umfasst, die einen greiferförmigen Entfernungsmechanismus (6) bereitstellt, der einem Heber (5) zugeordnet ist, um Höhenverstellungen für die Konditionierung des besagten Zahnimplantats zu ermöglichen, worin der besagte greiferförmige Entfernungsmechanismus (6) erstens Seitenrillen (8), um die Höhe des Hebers (5) zu verstellen; Seitenschlitze (9), um den Heber (5) einzuschalten und zu verschieben; zweitens, Seitenrillen (10) für die Handhabung des Implantats; Seitenlöcher (11) für das Einsetzen von Seitenhalter (4); und obere Vorsprünge (12), um einen inneren Deckel (2) einzuschalten und mit ihm zusammenzuwirken, worin der besagte Heber (5) Seitenkopplungen (13) bereitstellt, um auf die besagten Seitenschlitze (9) des besagten Entfernungsmechanismus (6) zusammenzuwirken; Seitenvorsprünge (14), um mit den besagten ersten Seitenrillen (8) des besagten Entfernungsmechanismus (6) zusammenzuwirken; und einen Kopf (15), um einen Behälter (3) einzubauen, hat, worin der besagte innere Deckel (2) aus elastischem Polymermaterial gemacht ist und die besagten Seitenhalter (4) und der Behälter (3) aus Titan gemacht sind; und die Anordnung wird in das besagte äußere Gehäuse (7) eingesetzt und mit dem besagten äußeren Deckel (1) geschlossen, was den inneren Deckel (2) gegen das besagte Entfernungsmechanismus (6) presst, um das Implantat in seiner gewünschten Stellung zu halten.

## Revendications

1. Un système d'emballage pour le stockage, la récupération et le transport d'un implant dentaire, avec un boîtier extérieur (7) et un couvercle extérieur (1), comprenant un ensemble qui fournit un mécanisme d'enlèvement en forme de pince (6) associé à un élévateur (5) pour permettre le réglage de la hauteur pour le conditionnement du dit implant dentaire, où ledit mécanisme d'enlèvement en forme de pince (6) a des premières rainures latérales (8) pour ajuster la hauteur du élévateur (5); des fentes latérales (9) pour engager et faire glisser le élévateur (5); des secondes rainures latérales (10) pour la manipulation des implants; des trous latérales (11) pour l'insertion de supports latéraux (4); et des protubérances supérieures (12) pour engager et interagir avec un couvercle intérieur (2), dans lequel ledit élévateur (5) fournit des accouplements latéraux (13) pour interagir avec lesdites fentes latérales (9) dudit mécanisme d'enlèvement (6); des projections latérales (14) pour interagir avec lesdites premières rainures latérales (8) dudit mécanisme d'enlèvement (6); et une tête (15) pour installer un réceptacle (3), dans lequel ledit couvercle intérieur (2) est en matériau polymère élastique et lesdits supports latéraux (4) et le réceptacle (3) sont en titane; et l' ensemble est inséré dans ledit boîtier extérieur (7) et fermé avec ledit couvercle extérieur (1), qui presse le couvercle intérieur (2) contre ledit mécanisme d'enlèvement (6) pour maintenir l'implant dans sa position désirée.
